# EUROPÄISCHE PATENTSCHRIFT

(11) **EP 3 022 505 B1**
(45) Veröffentlichungstag und Bekanntmachung des Hinweises auf die Patenterteilung: **07.03.2018**
(21) Anmeldenummer: 14737264.3
(22) Anmeldetag: 10.07.2014
(51) Int. Cl.: F25D 25/02, F25D 27/00, F25D 23/06

(54) **HAUSHALTSKÄLTEGERÄT MIT ZUMINDEST EINER LICHTQUELLE UND EINER AUFNAHME FÜR EINEN AUFLAGEBODEN**
DOMESTIC COOLING APPLIANCE HAVING AT LEAST ONE LIGHT SOURCE AND A RECEIVING MEANS FOR A SHELF
APPAREIL ÉLECTROMÉNAGER FRIGORIFIQUE ÉQUIPÉ D'AU MOINS UNE SOURCE LUMINEUSE ET D'UN LOGEMENT DESTINÉ À UNE CLAYETTE

(30) Priorität: 17.07.2013 DE 102013214000
(43) Veröffentlichungstag der Anmeldung: 25.05.2016
(73) Patentinhaber: BSH Hausgeräte GmbH, 81739 München (DE)
(72) Erfinder: ALT, René, 80335 München (DE); BECKE, Christoph, 83109 Grosskarolinenfeld (DE); EICHER, Max, 80689 München (DE); HARTWEIN, Christine, 80469 München (DE); KLEINLEIN, Philipp, 81371 München (DE); SCHMIDT, Tobias, 81371 München (DE); SCHOLER, Jochen, 81543 München (DE); STAUD, Ralph, 81667 München (DE); TISCHER, Thomas, 85540 Haar (DE)
(86) Internationale Anmeldenummer: PCT/EP2014/064829
(87) Internationale Veröffentlichungsnummer: WO 2015/007608

(56) Entgegenhaltungen:
- EP-A2- 2 420 782
- EP-A2- 2 778 585
- WO-A2-2010/133478
- WO-A2-2012/021807
- DE-A1-102010 061 401
- JP-A- 2008 264 399
- JP-U- S61 127 394

## Beschreibung

Die Erfindung betrifft ein Haushaltskältegerät mit einem Innenbehälter, der mit Wänden einen Innenraum zum Aufnehmen von Lebensmitteln begrenzt, und an zumindest seitlichen Vertikalwänden des Innenbehälters an Innenseiten Aufnahmen ausgebildet sind, an denen zumindest ein Auflageboden anbringbar ist.

Aus dem Stand der Technik ist es bekannt, dass Fachteiler beziehungsweise Auflageböden in einem Innenraum eines Haushaltskältegeräts horizontal herausgezogen und eingeschoben werden können. Diese Auflageböden sind an Aufnahmen, die an vertikalen Seitenwänden des Innenbehälters integriert sind oder anderweitig daran angeordnet sind, gekoppelt, und liegen insbesondere dort auf. Ein Auflageboden erstreckt sich üblicherweise über die gesamte Breite des Innenbehälters und bildet in dem Zusammenhang auch eine Trennebene zwischen zwei Teilräumen des Innenraums.

Bekannt ist es in dem Zusammenhang auch, dass ein derartiger Innenraum eines Haushaltskältegeräts insbesondere bei geöffneter Tür, die den Innenraum frontseitig verschließt, beleuchtet ist. Dazu können eine oder mehrere Lichtquellen angeordnet sein, die ein Ausleuchten des Innenraums mehr oder minder geeignet ermöglichen.

Gerade bei Ausgestaltungen von Haushaltskältegeräten, bei denen in einem Zwischenraum zwischen dem Innenbehälter und einem Außengehäuse zur thermischen Isolierung ein Vakuumisolationspaneel angeordnet ist, ist die Anbringung von Lichtquellen in dem Bereich nicht oder nur sehr eingeschränkt möglich. Da diese Vakuumisolationspaneele nicht einfach durchdrungen werden können, andererseits eine möglichst vollflächige Anbringung zur thermischen Isolationswirkung gewünscht ist, können bei gegenwärtig bekannten Lösungen die Lichtquellen teilweise nur suboptimal angebracht werden, so dass die Ausleuchtung des Innenraums oder Teilräumen davon eingeschränkt ist.

Die EP 2 420 782 A2 beschreibt einen Kühlschrank mit Auflageböden, welche über eine Stufe miteinander verbundene, ebene Bereiche aufweisen. Die Auflageböden liegen auf im Querschnitt dreieckigen Stützprofilen auf, in welche Lichtquellen integriert sind.

Die WO 2010/133 478 A2 beschreibt einen Kühlschrank mit Seitenwänden, welche sich in eine Tiefenrichtung erstreckende Nuten aufweisen. In einer Nut sind zwei Beladungskontrolleinrichtungen angeordnet, welche einen Kanal aufweisen, in welchen ein Auflageboden eingeführt ist. Die jeweilige Beladungskontrolleinrichtung umfasst eine Lichtquelle, welche Licht aussendet, wenn durch das Gewicht von Gegenständen, welche auf dem Auflageboden angeordnet sind, eine Grenzbeladung überschritten und daraufhin eine Feder zusammengedrückt wird, welche unterhalb des Kanals angeordnet ist. Die Lichtquelle strahlt hierbei Licht von der Seite her in den Auflageboden ein. Der Auflageboden ist aus einem transparenten Material gefertigt und kann Partikel mit Licht reflektierenden Eigenschaften aufweisen.

Es ist Aufgabe der vorliegenden Erfindung, ein Haushaltskältegerät zu schaffen, mittels welchem eine verbesserte Ausleuchtung des Innenraums erreicht ist.

Diese Aufgabe wird durch ein Haushaltskältegerät gemäß den Merkmalen des Anspruchs 1 gelöst.

Ein erfindungsgemäßes Haushaltskältegerät umfasst einen Innenbehälter, der mit Wänden einen Innenraum zum Aufnehmen von Lebensmitteln begrenzt. Diese Wände umfassen zwei vertikale Seitenwände, die dem Innenraum zugewandte Innenseiten aufweisen. An den Innenseiten sind paarweise gegenüberliegend Aufnahmen ausgebildet, an denen zumindest ein Auflageboden anbringbar ist. Ein derartiger Auflageboden beziehungsweise Fachteiler ist zum Aufbringen beziehungsweise Aufstellen der Lebensmittel vorgesehen.

Ein wesentlicher Gedanke der Erfindung ist darin zu sehen, dass an zumindest einer Aufnahme zumindest eine Lichtquelle angeordnet ist, die zum Ausleuchten des Innenraums orientiert ist. Die Aufnahme ist mit einem horizontalen Auflagesteg ausgebildet, in dem die zumindest eine Lichtquelle integriert angeordnet ist. Der Auflageboden ist auf diesem Auflagesteg angeordnet. Durch eine derartige Ausgestaltung sitzt die zumindest eine Lichtquelle an einer sehr exponierten Position, die ein verbessertes Ausleuchten des Innenraums bedarfsgerecht und situationsabhängig ermöglicht. Durch diese spezifische Positionierung der Lichtquelle wird ein ohnehin vorhandener Bauraum, der durch die Aufnahme gebildet ist, die üblicherweise somit eine gegenüber der Innenseite sich in den Innenraum erstreckende Formgebung aufweist, genutzt, um darin die Lichtquelle verbauen und anbringen zu können. Damit wird die Lichtquelle auch sehr lagespezifiziert und im Innenraum nach innen versetzt und ist somit gegenüber der eigentlichen Innenseite an der Vertikalwand weiter in den Innenraum positioniert.

Erfindungsgemäß ist vorgesehen, dass die Lichtquelle in zumindest einer ersten Einschubposition des Auflagebodens zur Lichtemission in den Innenraum von dem Auflageboden unverdeckt ist und in einer zweiten Einschubposition, die von der ersten Einschubposition unterschiedlich ist, verdeckt ist. Durch diese Ausgestaltung können sehr individuelle Lichtszenarien erzeugt werden, die dann jeweils abhängig von der jeweiligen Einschubposition des Auflagebodens ein bestmögliches Ausleuchten des Innenraums und zumindest desjenigen Teilraums, der sich unterhalb des Auflagebodens befindet, erlauben. Gerade dann, wenn dieser Auflageboden mit seiner Form und seinen Komponenten in den jeweiligen Einschubpositionen angeordnet ist, ist es im Stand der Technik nicht auszuschließen, dass die Ausleuchtung sehr beeinträchtigt ist, insbesondere auch dann, wenn ein Auflageboden umfänglich mit Lebensmitteln bestückt ist.

Des Weiteren ist vorgesehen, dass der Auflageboden einen Lichtleiter aufweist, der nur in der zweiten Einschubposition vor der Lichtquelle angeordnet ist und das Licht der Lichtquelle in den Lichtleiter einkoppelbar ist. Dies ist eine besonders hervorzuhebende Ausführung. Denn gerade in derjenigen Stellung des Auflagebodens, in der er vollständig auch in dem Innenraum in seiner Endlage angeordnet ist, kann das oben geschilderte Szenario, dass die ausreichende Ausleuchtung des Innenraums durch den Auflageboden selbst und/oder von eingebrachten Lebensmittel eingeschränkt ist, verbessert werden. Durch den zusätzlichen Lichtleiter, der darüber hinaus auch noch am Auflageboden selbst angeordnet ist, wird die Beleuchtung örtlich und lichtmengenmäßig wesentlich verbessert. Die Lichtquelle strahlt in dieser Position des Auflagebodens nämlich nicht mehr direkt oder nurmehr in geringem Anteil direkt in den Innenraum ein. Vielmehr wird durch die Einkopplung des emittierten Lichts in den Lichtleiter eine örtlich gegenüber der Lichtquelle unterschiedliche und umfänglichere über ein größeres Umfeld erreichte Einstrahlung in den Innenraum erreicht.
Durch diese Ausgestaltungen ist es somit erreicht, dass insbesondere im noch nicht vollständig eingeschobenen Zustand eine wesentliche Ausleuchtung des Innenraums zumindest unter dem Auflageboden durch die Lichtquelle in der Aufnahme direkt erfolgt, und in dieser zweiten Einschubposition dann das Licht zumindest überwiegend, insbesondere vollständig, nicht mehr direkt über die Lichtquelle in den Innenraum eingestrahlt wird, sondern zunächst in den Lichtleiter eingekoppelt wird und von dem dann in den Innenraum abgestrahlt wird.
Vorzugsweise ist vorgesehen, dass die zweite Einschubposition die vollständig eingeschobene Endposition ist. Gemäß der Erfindung ist der Lichtleiter in einer Frontleiste des Auflagebodens angeordnet. Dadurch kann er mechanisch positionsgenau und sicher angeordnet werden. Darüber hinaus ist gerade diese spezifische Stelle sehr exponiert, um dann quasi auch von vorne und oben in den unterhalb des Auflagebodens gebildeten Teilraum eine hervorzuhebende verbesserte Ausleuchtung erreichen zu können.

Vorzugsweise ist vorgesehen, dass die Frontleiste den Lichtleiter von oben abdeckt. Durch diese Ausgestaltung wird verhindert, dass eine unerwünschte und gegebenenfalls nutzlose Lichtabstrahlung durch den Auflageboden nach oben erfolgt, der gegebenenfalls dann ohnehin mit Lebensmitteln bedeckt ist. Vielmehr wird durch diese abdeckende Anordnung von oben das gesamte Licht des Lichtleiters in diesen unterhalb des Auflagebodens mit dem Lichtleiter gebildeten Teilraum abgestrahlt.

Vorzugsweise ist vorgesehen, dass eine dem Lichtleiter zugewandte Seite der Frontleiste zumindest bereichsweise reflektierend ausgebildet ist, beispielsweise metallisch beschichtet ist oder anderweitig als Reflexionsfläche ausgebildet ist. Durch diese Ausgestaltung können die oben genannten Vorteile nochmals verbessert werden.

Es kann vorgesehen sein, dass die Frontleiste eine Frontabdeckung aufweist, die den Lichtleiter frontseitig zumindest bereichsweise abdeckt. Es kann hier eine Ausgestaltung realisiert sein, bei der die Frontabdeckung den Lichtleiter vollständig frontseitig abdeckt. Ein gegebenenfalls unerwünschtes Anleuchten eines Nutzers, der in den Innenraum bei geöffneter Tür blickt, ist dadurch verhindert.

Andererseits ist es jedoch auch möglich, dass an gezielten Stellen der Frontabdeckung eine Lichtemission des Lichtleiters durch die Frontabdeckung erfolgen kann. Dadurch können auch gezielt Lichtabstrahlungen nach vorne und insbesondere auch schräg nach unten vorne erzielt werden. Beispielsweise kann dann eine weiter unten angeordnete Schublade, die dann ausgezogen ist, von oben eingeleuchtet werden, so dass auch hier eine verbesserte Ausleuchtung einer derartigen Schublade erreicht ist.

Vorzugsweise ist vorgesehen, dass sich der Lichtleiter stabförmig im Wesentlichen über die gesamte Breite des Auflagebodens erstreckt. Dadurch kann über die gesamte Breite eine sehr gleichmäßige Ausleuchtung erzielt werden.

Vorzugsweise ist vorgesehen, dass die zumindest eine Lichtquelle eine Leuchtdiode ist. Diese ist ein in dem Zusammenhang besonders hervorzuhebendes Leuchtmittel, da es sehr kompakt und platzsparend aufgebaut ist und besonders geeignet ist, in eine üblicherweise auch sehr kleine oder schmale Aufnahme aufgenommen und vollständig integriert zu werden. Die Aufnahme muss bei einer derartigen spezifischen Art einer Lichtquelle nicht vergrößert oder anderweitig an die Lichtquelle angepasst werden. Dadurch wird keine Einschränkung des Innenraums erwirkt und das gesamte Bewegungs- und Bauteilekonzept muss mit einer derartigen Art einer Lichtquelle nicht verändert werden.

Vorzugsweise ist vorgesehen, dass der Ablageboden eine durchsichtige Ablageplatte aufweist, die von einem Trägerrahmen umfangsseitig zumindest bereichsweise umgriffen ist. Der Trägerrahmen ist an der Aufnahme zerstörungsfrei lösbar anbringbar und zum horizontalen Verschieben des Ablagebodens in dem Innenraum angeordnet.

Die Ablageplatte kann beispielsweise eine Glasplatte oder eine Kunststoffplatte sein.

Vorzugsweise ist vorgesehen, dass in einem Zwischenraum zwischen einer Vertikalwand des Innenbehälters und einem Außengehäuse des Haushaltskältegeräts ein Vakuumisolationspaneel angeordnet ist. Insbesondere kann dies vollflächig in diesem Zwischenraum zwischen einer Vertikalwand und dem Außengehäuse angeordnet sein. Gerade bei derartigen Ausgestaltungen ist die Erfindung besonders vorteilhaft. Denn es ist dann keine Aussparung im oder ein Hindurchtreten durch ein Vakuumisolationspaneel erforderlich, um große Lichtquellen in diesem Zwischenraum positionieren zu können und damit den Innenraum ausleuchten zu können. Die thermische Isolationswirkung des Vakuumisolationspaneels ist dadurch nicht beeinträchtigt. Da üblicherweise gerade an den Positionen, an denen die Aufnahmen an den Vertikalwänden ausgebildet sind, um sinnvolle Teilräume durch die Auflageböden separieren zu können, wenn in dem Zwischenraum auch dieses Vakuumisolationspaneel angeordnet. Es ist durch die Erfindung dann besonders begünstigt, sowohl die thermischen Eigenschaften als auch das Ausleuchten bei Haushaltskältegeräten mit derartigen Vakuumisolationspaneelen zu verbessern.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ein Ausführungsbeispiel der Erfindung wird nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts in Teilansicht;
- Fig. 2: eine vergrößerte Darstellung eines Teilausschnitts gemäß Fig. 1;
- Fig. 3: eine perspektivische Darstellung von Teilkomponenten eines Auflagebodens und einer Aufnahme an einer Innenseite einer Vertikalwand eines Innenbehälters des Haushaltskältegeräts gemäß Fig. 1 und Fig. 2 in einer ersten Einschubposition des Auflagebodens; und
- Fig. 4: eine Darstellung gemäß Fig. 3, bei der der Auflageboden in einer zweiten Einschubposition gezeigt ist.

In den Figuren werden gleiche oder funktionsgleiche Elemente mit den gleichen Bezugszeichen versehen.

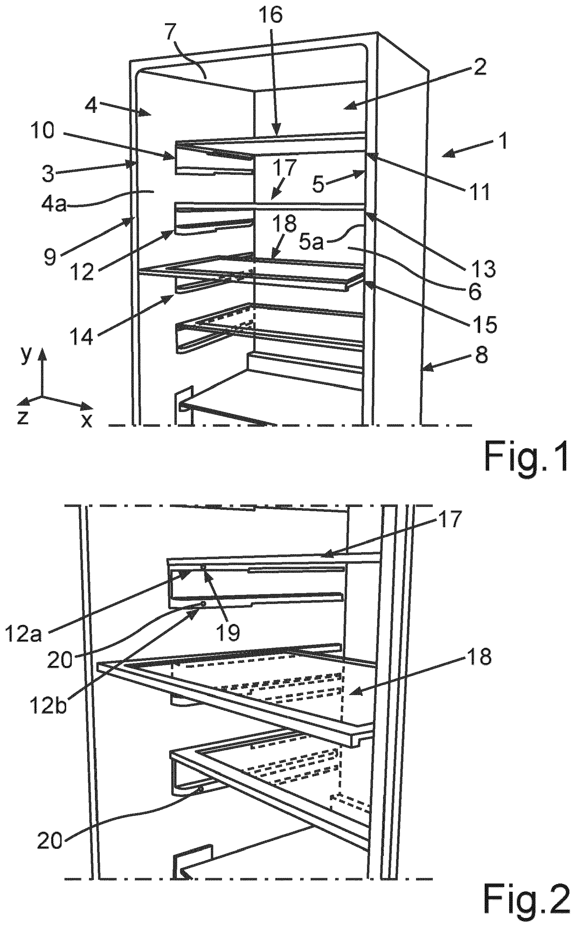

In Fig. 1 ist in einer perspektivischen Darstellung ein Haushaltskältegerät 1 gezeigt, welches beispielsweise ein Kühlgerät oder ein Gefriergerät oder ein Kühl-Gefrier-Kombigerät sein kann. Das Haushaltskältegerät 1 umfasst einen Innenraum 2, der durch Wände eines Innenbehälters 3 begrenzt ist. In dem Zusammenhang umfasst der Innenbehälter 3 eine erste seitliche Vertikalwand 4, eine gegenüberliegende zweite seitliche Vertikalwand 5, eine Rückwand 6, eine Deckenwand 7 und eine in Fig. 1 nicht gezeigte Bodenwand.

Frontseitig weist der Innenbehälter 3 eine Beschickungsöffnung auf, durch welche der Innenraum 2 zugänglich ist und welche durch eine nicht gezeigte Tür verschließbar ist.

Darüber hinaus umfasst das Haushaltskältegerät 1 einen Außenbehälter beziehungsweise ein Außengehäuse 8, welches den Innenbehälter 3 umgibt. Zwischen dem Innenbehälter 3 und dem Außengehäuse 8 ist ein Zwischenraum 9 ausgebildet, in dem thermisches Isolationsmaterial eingebracht ist. Im Ausführungsbeispiel ist in dem Zusammenhang vorgesehen, dass zumindest zwischen dem Außengehäuse 8 und der seitlichen Vertikalwand 4 sowie zwischen dem Außengehäuse 8 und der seitlichen Vertikalwand 5 jeweils ein Vakuumisolationspaneel, vorzugsweise vollflächig, angeordnet ist.

Wie darüber hinaus in Fig. 1 zu erkennen ist, ist an einer Innenseite 4a und an einer Innenseite 5a der Vertikalwände 4 und 5 eine Mehrzahl von Aufnahmen 10, 11, 12, 13, 14 und 15 ausgebildet, wobei darüber hinaus auch noch weitere Aufnahmen vorgesehen sind, jedoch der Übersichtlichkeit dienend nicht mit weiteren Bezugszeichen versehen sind. Die Aufnahmen sind paarweise gegenüberliegend auf gleichem Höhenniveau angeordnet, so dass beispielsweise auf den Aufnahmen 10 und 11 ein erster Auflageboden 16 aufgebracht ist und somit eine horizontale Orientierung aufweist. Ein zweiter Auflageboden 17 ist auf den Aufnahmen 12 und 13 angeordnet, wohingegen ein weiterer Auflageboden 18 auf den Aufnahmen 14 und 15 angeordnet ist.

Die Auflageböden 16 bis 18 erstrecken sich jeweils über die gesamte Breite (Erstreckung in x-Richtung) des Innenraums 2. Durch die Auflageböden 16 bis 18 wird der Innenraum 2 in Teilräume geteilt, wobei die Böden 16 bis 18 jeweils zur Auflage beziehungsweise zum Aufstellen von Lebensmitteln darauf dienen.

Beispielhaft ist gezeigt, dass die beiden Auflageböden 16 und 17 in einer jeweils zweiten Einschubposition angeordnet sind, die durch die vollständig eingeschobene Endposition gekennzeichnet ist.

Demgegenüber ist der Auflageboden 18 in einer dazu unterschiedlichen ersten Einschubposition gezeigt, die gegenüber der vollständig eingeschobenen Endposition eine etwas herausgezogene Einschubposition darstellt.

Wie im Ausführungsbeispiel ausgebildet, umfasst eine Aufnahme, beispielsweise die Aufnahme 10 gemäß der vergrößerten Darstellung in Fig. 2, die einen Teilausschnitt der Darstellung in Fig. 1 zeigt, eine Mehrzahl von Lichtquellen. So ist die Aufnahme 12 mit einem oberen horizontalen Auflagesteg 12a ausgebildet, in dem eine erste Lichtquelle 19 integriert angeordnet ist. Wie aus den Darstellungen in Fig. 1 und Fig. 2 zu erkennen ist, ist der Auflageboden 16 auf diesem oberen Steg 12a angeordnet. An der gegenüberliegenden Seite ist der Auflageboden 16 ebenfalls auf einem oberen, nicht näher zu sehenden und gekennzeichneten Auflagesteg angeordnet.

In einem zur Aufnahme 12 gehörenden unteren horizontalen Auflagesteg 12b ist eine weitere Lichtquelle 20 angeordnet. An der gegenüberliegenden Aufnahme 13 ist ebenfalls auf gleicher Höhe ein weiterer unterer Auflagesteg angeordnet, in dem ebenfalls eine Lichtquelle 20 angeordnet ist, wobei eine Lichtquelle 19 an dem oberen Auflagesteg der Aufnahme 13 ausgebildet ist. Wie aus der Darstellung in Fig. 2 zu erkennen ist, sind die Lichtquellen 19 und 20 in einem vorderen Drittel, insbesondere einem vorderen Viertel der Länge der Auflagestege angeordnet.

Es ist zu erwähnen, dass die Lichtquellen 19 und 20 Leuchtdioden sind und in den Aufnahmen verbaut sind. Sie sind daher gegenüber den Innenseiten 4a und 5a weiter nach innen versetzt in den Innenraum 2 positioniert.

In analoger Ausgestaltung sind die Aufnahmen 10, 11, 14 und 15 ausgebildet, die ebenfalls jeweils zumindest eine Lichtquelle in den jeweiligen Stegen aufweisen und diese sind örtlich entsprechend zu den erläuterten Lichtquellen 19 und 20 positioniert.

Bei der Darstellung in Fig. 2 sind sowohl die zweite Einschubposition des Auflagebodens 17 als auch die erste Einschubposition des Auflagebodens 18 zu erkennen.

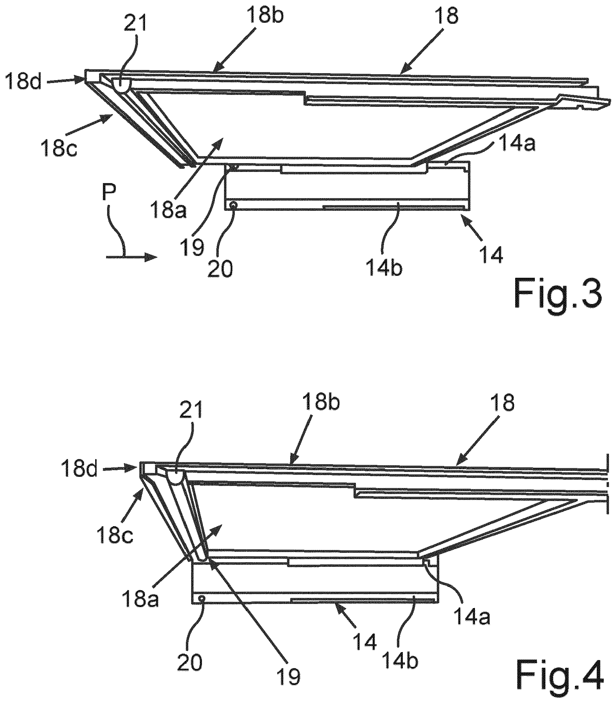

In Fig. 3 ist in einer perspektivischen Seitenansicht von unten die erste Einschubposition des Auflagebodens 18 gezeigt. Der Auflageboden 18 umfasst eine durchsichtig ausgebildete Auflageplatte 18a und einen diese Auflageplatte 18a umfangsseitig umgebenden Trägerrahmen 18b. Der Trägerrahmen 18b umfasst eine Frontleiste 18c, die der Rückwand 6 abgewandt positioniert ist.

In dieser Frontleiste ist in Breitenrichtung (x-Richtung, wie sie in Fig. 1 definiert ist) ein Lichtleiter 21 angeordnet, der sich einstückig über die im Wesentlichen gesamte Breite des Auflagebodens 18 erstreckt. Der Lichtleiter 21 wird durch die Frontleiste 18c von oben abgedeckt. Er kann zusätzlich auch frontseitig durch eine Frontabdeckung 18d der Frontleiste 18c abgedeckt sein.

Wie Fig. 3 zeigt, ist die Anordnung der Aufnahme 14 mit dem oberen Auflagesteg 14a und einem parallel dazu verlaufenden unteren Auflagesteg 14b so gestaltet, dass in dieser ersten Einschubposition des Auflagebodens 18 die Lichtquelle 19 desjenigen Auflagestegs 14a, auf dem der Auflageboden 18 gerade aufliegt und relativ dazu verschoben wird, durch den Auflageboden 18 nicht abgedeckt ist. Das von der Lichtquelle 19 emittierte Licht wird daher direkt in den Aufnahmeraum 2 und insbesondere in den Teilraum, der von oben durch den Auflageboden 18 begrenzt wird, eingestrahlt. Zusätzlich wird hier auch das Licht der Lichtquelle 20 entsprechend in diesen Teilraum eingestrahlt. In den Lichtleiter 21 wird in dieser ersten Einschubposition noch kein Licht der Lichtquellen 19 und 20 eingekoppelt.

Wird ausgehend von dieser ersten Einschubposition dann der Auflageboden 18 in Richtung des Pfeils P in Tiefenrichtung und somit in z-Richtung weiter in den Innenraum 2 eingeschoben, so wird die Position gemäß Fig. 4 erreicht. Diese Position ist dann die zweite Einschubposition und im Ausführungsbeispiel die vollständig eingeschobene Endposition. In dieser Stellung ist die Lichtquelle 19 durch den Lichtleiter 21 abgedeckt und eine direkte Abstrahlung des Lichts der Lichtquelle 19 in den Innenraum 2 ist quasi verhindert bzw. vernachlässigbar. Das Licht der Lichtquelle 19 wird bei dieser Position dann im Wesentlichen vollständig in den Lichtleiter 21 eingekoppelt und von diesem gleichmäßig über seine Länge in den Teilraum unterhalb des Auflagebodens 18 abgestrahlt. Über die Lichtquelle 20 wird das Licht weiterhin direkt in diesen Teilraum eingestrahlt. Selbiges erfolgt mit einer Lichtquelle 20 in einem unteren Steg der Aufnahme 15, wohingegen eine Einkopplung des Lichts einer Lichtquelle 19 in einem oberen Steg der Aufnahme 15 analog zur Einkopplung des Lichts der Lichtquelle 19 in den oberen Steg 14a erfolgt.

Gemäß einer weiteren Ausgestaltung kann vorgesehen sein, dass die Frontabdeckung 18d zumindest bereichsweise für Licht, das von dem Lichtleiter 21 abgestrahlt wird, durchlässig ist, so dass dieses Licht auch nach vorne oder schräg nach unten und vorne abgestrahlt werden kann. So kann auch die Ausleuchtung eines teilweise vom Innenraum 2 herausgezogenen Schubladens, der unterhalb beispielsweise des Auflagebodens 18, wie in Fig. 4 gezeigt ist, angeordnet ist, erfolgen.

### Bezugszeichenliste

- 1: Haushaltskältegerät
- 2: Innenraum
- 3: Innenbehälter
- 4: Seitliche Vertikalwand
- 4a: Innenseite
- 5: Seitliche Vertikalwand
- 5a: Innenseite
- 6: Rückwand
- 7: Deckenwand
- 8: Außengehäuse
- 9: Zwischenraum
- 10: Aufnahme
- 10a: Auflagesteg
- 10b: Auflagesteg
- 11: Aufnahme
- 12: Aufnahme
- 13: Aufnahme
- 14: Aufnahme
- 14a: Oberer Auflagesteg
- 14b: Unterer Auflagesteg
- 15: Aufnahme
- 16: Auflageboden
- 17: Auflageboden
- 18: Auflageboden
- 18a: Auflageplatte
- 18b: Trägerrahmen
- 18c: Frontleiste
- 18d: Frontabdeckung
- 19: Erste Lichtquelle
- 20: Zweite Lichtquelle
- 21: Lichtleiter
- P: Pfeil

## Patentansprüche

1. Haushaltskältegerät (1) mit einem Innenbehälter (3), der mit Wänden (4 bis 7) einen Innenraum (2) zum Aufnehmen von Lebensmitteln begrenzt, und an zumindest seitlichen Vertikalwänden (4, 5) des Innenbehälters (3) an Innenseiten (4a, 5a) Aufnahmen (10 bis 15) ausgebildet sind, an denen zumindest ein Auflageboden (16 bis 18) anbringbar ist, wobei an zumindest einer Aufnahme (10 bis 15) zumindest eine Lichtquelle (19, 20) angeordnet ist, die zum Ausleuchten des Innenraums (2) orientiert ist, wobei die Aufnahme (10 bis 15) mit einem horizontalen Auflagesteg (12a) ausgebildet ist, in dem die zumindest eine Lichtquelle (19) integriert angeordnet ist, wobei der Auflageboden (16 bis 18) auf diesem Auflagesteg (12a) angeordnet ist, wobei die Lichtquelle (19, 20) in zumindest einer ersten Einschubposition des Auflagebodens (16 bis 18) zur Lichtemission in den Innenraum (2) von dem Auflageboden (16 bis 18) unverdeckt ist und in einer zweiten Einschubposition des Auflagebodens (16 bis 18) verdeckt ist, wobei der Auflageboden (16 bis 18) einen Lichtleiter (21) aufweist, der nur in der zweiten Einschubposition vor der Lichtquelle (19, 20) angeordnet ist und das Licht der Lichtquelle (19, 20) in der zweiten Einschubposition in den Lichtleiter (21) einkoppelbar ist, wobei der Lichtleiter (21) in einer Frontleiste (18c) des Auflagebodens (16 bis 18) angeordnet ist.

2. Haushaltskältegerät (1) nach Anspruch 1, **dadurch gekennzeichnet, dass** die zweite Einschubposition die vollständig eingeschobene Endposition ist.

3. Haushaltskältegerät (1) nach Anspruch 1, **dadurch gekennzeichnet, dass** die Frontleiste (18c) den Lichtleiter (21) von oben abdeckt.

4. Haushaltskältegerät (1) nach Anspruch 1 oder 3, **dadurch gekennzeichnet, dass** die Frontleiste (18c) eine Frontabdeckung (18d) aufweist, die den Lichtleiter (21) frontseitig zumindest bereichsweise abdeckt.

5. Haushaltskältegerät (1) nach einem der Ansprüche 1 bis 4, **dadurch gekennzeichnet, dass** sich der Lichtleiter (21) stabförmig im Wesentlichen über die gesamte Breite des Auflagebodens (16 bis 18) erstreckt.

6. Haushaltskältegerät (1) nach einem der vorhergehenden Ansprüche, **dadurch gekennzeichnet, dass** die Lichtquelle (19, 20) eine Leuchtdiode ist.

7. Haushaltskältegerät (1) nach einem der vorhergehenden Ansprüche, **dadurch gekennzeichnet, dass** der Ablageboden (16 bis 18) eine durchsichtige Ablageplatte (18a) aufweist, die von einem Trägerrahmen (18b) umfangsseitig zumindest bereichsweise umgriffen ist, und der Trägerrahmen (18b) an der Aufnahme (10 bis 15) zum horizontalen Verschieben des Ablagebodens (16 bis 18) in dem Innenraum (2) angeordnet ist.

8. Haushaltskältegerät (1) nach einem der vorhergehenden Ansprüche, **dadurch gekennzeichnet, dass** in einem Zwischenraum (9) zwischen einer Vertikalwand (4, 5) des Innenbehälters (3) und einem Außengehäuse (8) ein Vakuumisolationspaneel angeordnet ist, insbesondere vollflächig angeordnet ist.

## Claims

1. Domestic cooling appliance (1) having an internal container (3) with walls (4 to 7) delimiting an interior space (2) for receiving food, and receiving means (10 to 15) are arranged on internal sides (4a, 5a) of at least lateral vertical walls (4, 5) of the internal container (3), on which receiving means (10 to 15) at least one shelf (16 to 18) can be mounted, wherein at least one light source (19, 20) which is oriented in order to illuminate the interior space (2) is arranged on at least one receiving means (10 to 15), wherein the receiving means (10 to 15) are embodied with a horizontal support bar (12a) in which at least one light source (19) is arranged in integrated fashion, wherein the shelf (16 to 18) is arranged on said support bar (12a), wherein in at least one first insertion position of the shelf (16 to 18) the light source (19, 20) for emitting light into the interior space (2) is not covered by the shelf (16 to 18), and in a second insertion position of the shelf (16 to 18) the light source (19, 20) is covered, wherein the shelf (16 to 18) has a light guide (21) which is arranged only in the second insertion position in front of the light source (19, 20) and the light from the light source (19, 20) can be coupled into the light guide (21) in the second insertion position, wherein the light guide (21) is arranged in a front strip (18c) of the shelf (16 to 18).

2. Domestic cooling appliance (1) according to claim 1, **characterised in that** the second insertion position is the fully inserted end position.

3. Domestic cooling appliance (1) according to claim 1, **characterised in that** the front strip (18c) covers the light guide (21) from above.

4. Domestic cooling appliance (1) according to claim 1 or 3, **characterised in that** the front strip (18c) has a front cover (18d) which covers the light guide (21) on the front side at least in areas.

5. Domestic cooling appliance (1) according to one of claims 1 to 4, **characterised in that** the light guide (21) extends in linear fashion essentially over the full width of the shelf (16 to 18).

6. Domestic cooling appliance (1) according to one of the preceding claims, **characterised in that** the light source (19, 20) is a light-emitting diode.

7. Domestic cooling appliance (1) according to one of the preceding claims, **characterised in that** the shelf (16 to 18) has a transparent shelf plate (18a) which is surrounded circumferentially by a supporting frame (18b) at least in areas, and the supporting frame (18b) is arranged on the receiving means (10 to 15) for the horizontal displacement of the shelf (16 to 18) in the interior space (2).

8. Domestic cooling appliance (1) according to one of the preceding claims, **characterised in that** a vacuum insulation panel is arranged in an interspace (9) between a vertical wall (4, 5) of the internal container (3) and an external housing (8), in particular is arranged over the full area.

## Revendications

1. Appareil frigorifique (1) à usage domestique, comprenant un réservoir intérieur (3) lequel, à l'aide de parois (4 à 7), délimite un espace intérieur (2) destiné à réceptionner des aliments, et sur au moins des parois verticales (4, 5) latérales du réservoir intérieur (3), des logements (10 à 15) étant réalisés sur des côtés intérieurs (4a, 5a), sur lesquels logements au moins une clayette (16 à 18) peut être posée, au moins une source de lumière (19, 20) étant disposée sur au moins un logement (10 à 15), laquelle est orientée pour éclairer l'espace intérieur (2), le logement (10 à 15) étant réalisé avec une nervure d'appui (12a) horizontale dans laquelle l'au moins une source de lumière (19) est disposée de manière intégrée, la clayette (16 à 18) étant disposée sur cette nervure d'appui (12a), la source de lumière (19, 20), pour l'émission de lumière dans l'espace intérieur (2), étant non recouverte par la clayette (16 à 18) dans au moins une première position d'insertion de la clayette (16 à 18) et étant recouverte dans une seconde position d'insertion de la clayette (16 à 18), la clayette (16 à 18) présentant une fibre optique (21) qui est disposée devant la source de lumière (19, 20) seulement dans la seconde position d'insertion, et la lumière de la source de lumière (19, 20) pouvant être injectée dans la fibre optique (21) dans la seconde position d'insertion, la fibre optique (21) étant disposée dans une baguette frontale (18c) de la clayette (16 à 18).

2. Appareil frigorifique (1) à usage domestique selon la revendication 1, **caractérisé en ce que** la seconde position d'insertion est la position finale complètement insérée.

3. Appareil frigorifique (1) à usage domestique selon la revendication 1, **caractérisé en ce que** la baguette frontale (18c) recouvre la fibre optique (21) depuis le haut.

4. Appareil frigorifique (1) à usage domestique selon la revendication 1 ou 3, **caractérisé en ce que** la baguette frontale (18c) présente un recouvrement frontal (18d) qui recouvre la fibre optique (21) au moins en partie côté frontal.

5. Appareil frigorifique (1) à usage domestique selon l'une quelconque des revendications 1 à 4, **caractérisé en ce que** la fibre optique (21) s'étend en forme de barre essentiellement sur toute la largeur de la clayette (16 à 18).

6. Appareil frigorifique (1) à usage domestique selon l'une quelconque des revendications précédentes, **caractérisé en ce que** la source de lumière (19, 20) est une diode électroluminescente.

7. Appareil frigorifique (1) à usage domestique selon l'une quelconque des revendications précédentes, **caractérisé en ce que** la clayette (16 à 18) présente une plaque de pose (18a) transparente qui est entourée au moins en partie sur le pourtour par un cadre de support (18b), et **en ce que** le cadre de support (18b) est disposé sur le logement (10 à 15) pour le déplacement horizontal de la clayette (16 à 18) dans l'espace intérieur (2).

8. Appareil frigorifique (1) à usage domestique selon l'une quelconque des revendications précédentes, **caractérisé en ce qu'**un panneau d'isolation sous vide est disposé dans un espace intermédiaire (9) entre une paroi verticale (4, 5) du réservoir intérieur (3) et un boîtier extérieur (8), notamment **en ce qu'**il est disposé sur toute la surface.
